# EUROPÄISCHE PATENTSCHRIFT

(11) **EP 1 614 577 B1**
(45) Veröffentlichungstag und Bekanntmachung des Hinweises auf die Patenterteilung: **23.07.2008**
(21) Anmeldenummer: 05013755.3
(22) Anmeldetag: 25.06.2005
(51) Int. Cl.: B60K 23/02, F16D 25/08

(54) **Hydraulisches Systems zur Betätigung einer Kupplung eines Kraftfahrzeuges**
Hydraulic system for actuation of a clutch of a motor vehicle
Système hydraulique pour l'actionnement d'un embrayage d'un véhicule automobile

(30) Priorität: 08.07.2004 DE 102004032988
(43) Veröffentlichungstag der Anmeldung: 11.01.2006
(73) Patentinhaber: LuK Lamellen und Kupplungsbau Beteiligungs KG, 77815 Bühl (DE)
(72) Erfinder: Nazari, Behzad, Dr., 2622 Nürtingen (DE)
(74) Vertreter: Duschl, Edgar Johannes

(56) Entgegenhaltungen:
- EP-A- 1 433 971
- WO-A-03/097422
- DE-A1- 19 824 480
- US-B1- 6 418 717

## Beschreibung

Die vorliegende Erfindung betrifft ein hydraulisches Systems zur Betätigung einer Kupplung eines Kraftfahrzeuges, umfassend einen Geberzylinder mit einem Gehäuse, einem in diesem axial verschiebbar angeordneten Kolben, der einen mit einer Hydraulikflüssigkeit gefüllten Druckraum begrenzt und bei Betätigung des Geberzylinders mittels einer auf den Kolben wirkenden Kolbenstange axial verschoben wird und dadurch die Hydraulikflüssigkeit mit Druck beaufschlagt, wobei der Kolben in einer Schnüffelstellung eine Verbindung zwischen einer Schnüffelbohrung und dem Druckraum freigibt.

Ein hydraulisches System nach dem Oberbegriff des Anspruchs 1 ist in der EP 1 433 971 A2 offenbart.

Bei Fahrzeugkupplungen unterscheidet man im Prinzip die heute gängigen selbstnachstellenden Kupplungen (Self-Adjusting-Clutch, SAC) die gegen die Kraft einer Tellerfeder geöffnet werden und bei der durch die Kraft der Tellerfeder in einer entlasteten Stellung der Kupplung, bei der also von einer Ausrückvorrichtung keine Kraft auf die Tellerfeder ausgeübt wird, die Kupplung vollständig geschlossen ist. Auf der anderen Seite gibt es Kupplungen, die aktiv zugedrückt werden, die also durch die Kraft der Tellerfeder in eine geöffnete Position gedrückt werden und durch ein Ausrücksystem aktiv geschlossen werden (LAC). Beide Kupplungen besitzen einen eigenen Nullpunkt in der Kraftkennlinie, wird keine Kraft zum Beispiel mittels des Ausrücksystems auf die Kupplung ausgeübt, strebt diese somit diesem Nullpunkt zu. Fährt bei einem hydrostatischen Ausrücksystem der Geberzylinder zwecks Druck- und Volumenausgleich zur Schnüffelposition, so ist das Gesamtsystem drucklos und steht unter Atmosphärendruck. Die Schnüffelposition ist eine Position des Kolbens des Geberzylinders, bei der der Druckraum des Geberzylinders über eine Schnüffelbohrung mit einem Ausgleichsbehälter verbunden ist. Der Ausgleichsbehälter selbst steht üblicherweise unter Atmosphärendruck. Da das hydraulische System drucklos und die Kupplung selbst beziehungsweise die Tellerfeder in einer kraftlosen Nullpunktlage verbleibt, kann der Kontakt zwischen dem Ausrücklager des Zentralausrückers und den Tellerfederzungen der Kupplung entweder gänzlich verloren gehen oder nur kraftreduziert vorhanden sein. Durch den gänzlichen Verlust der Kontaktstelle ergibt sich während des Aktorvorhubs ein Leerlauf, der zu einer Verstimmung der in der Regelung zur Kupplungsbetätigung berücksichtigten Übertragungsfunktion der Strecke führen kann. Ist der Kontakt kraftreduziert, kommt es zum zusätzlichen Verschleiß auf der Oberfläche des Ausrücklagers durch die Tellerfederzungen. Diesem grundsätzlichen Problem wird üblicherweise durch eine Vorlastfeder im Zentralausrücker entgegengewirkt.

Ist durch zu geringen Bauraum die Verwendung einer Vorlastfeder nicht möglich, ergibt sich das Problem eines vergrößerten Verschleißes am Ausrücklager beziehungsweise den Tellerfederzungen. Aufgabe der vorliegenden Erfindung ist es daher, bei einem Ausrücksystem ohne Vorlastfedern den Verschleiß an Ausrücklager und Tellerfederzungen zu verringern.

Dieses Problem wird durch ein System nach Anspruch 1 gelöst. Erfindungsgemäß ist ein hydraulisches Systems zur Betätigung einer Kupplung eines Kraftfahrzeuges vorgesehen, umfassend einen Geberzylinder mit einem Gehäuse, einem in diesem axial verschiebbar angeordneten Kolben, der einen mit einer Hydraulikflüssigkeit gefüllten Druckraum begrenzt und bei Betätigung des Geberzylinders mittels einer auf den Kolben wirkenden Kolbenstange axial verschoben wird und dadurch die Hydraulikflüssigkeit mit Druck beaufschlagt, wobei der Kolben in einer Schnüffelstellung eine Verbindung zwischen einer Schnüffelbohrung und dem Druckraum freigibt, und wobei der Kolben in einer entlasteten Stellung der Kupplung soweit in eine Warteposition in den Druckraum geschoben wird, dass die Schnüffelbohrung verschlossen wird und ein Druck größer als der Atmosphärendruck in dem hydraulischen System aufgebaut wird.

Die entlastete Stellung der Kupplung ist die Stellung, die diese durch die Kraft der Tellerfeder anstrebt. Bei üblichen SAC-Kupplungen ist dies die geschlossene Stellung, bei aktiv zugedrückten Kupplungen ist dies die geöffnete Stellung, bei der also kein Moment übertragen wird. Die Warteposition, in die der Kolben in den Druckraum geschoben wird, ist die Position, bei der ein geringer Druck in dem hydraulischen System aufgebaut ist und der Kolben des Geberzylinders im stationären Betrieb des Kraftfahrzeuges verbleibt. Bei einem System, bei dem die Kupplung aktiv geöffnet wird, ist dies die geschlossene Stellung, bei einem System, bei dem die Kupplung aktiv geschlossen wird, ist dies die geöffnete Stellung.

In einer Weiterbildung des Systems ist vorgesehen, dass die Kupplung gegen den Druck in dem hydraulischen System geschlossen wird und dass der Kolben in der entlasteten Stellung der Kupplung soweit in den Druckraum geschoben wird, dass von der Kupplung kein Moment übertragen wird.

Die Momentenkennlinie einer kraftsensierten LAC-Kupplung zeigt direkt nach dem Schnüffeln einen flachen Verlauf. In diesem Bereich ist die Kupplung vollständig geöffnet, so dass kein Moment übertragen wird. Dabei besteht die Möglichkeit, dass der Aktor nach der Abtastung des Endanschlages während einer Referenzfahrt und dem Schnüffelbereich bis zu einem definierten Stellerweg in eine Warteposition vorgefahren wird. Die Warteposition ist abhängig von der Kraft- und Momentenkennlinie der Kupplung zu definieren. An diesem Punkt soll eine Kraft und damit ein Druck in der hydraulischen Strecke aufgebaut werden, wobei noch kein Moment durch die Kupplung übertragen wird. Der aufgebaute Druck soll dem Kraftniveau einer im Zentralausrücker eingebauten Vorlastfeder entsprechen.

Alternativ kann vorgesehen sein, dass die Kupplung gegen den Druck in dem hydraulischen System geöffnet wird und dass der Kolben in der entlasteten Stellung der Kupplung soweit in den Druckraum geschoben wird, dass von der Kupplung in etwa das Maximalmoment übertragen werden kann.

Im Gegensatz zu einer LAC-Kupplung ist die SAC-Kupplung im Schnüffelbereich vollständig geschlossen, so dass das volle Moment übertragen wird. Daher ist die Bestimmung einer Warteposition nach einer Referenzfahrt des Aktors und dem Überwinden des Schnüffelbereichs unkritisch. Kleine Änderungen in der Momentenübertragung können in diesem Bereich in Kauf genommen werden.

Der Kolben des Geberzylinders wird vorzugsweise durch einen elektromechanischen Aktor betätigt.
- Fig. 1: eine schematische Darstellung eines hydraulischen Systems anhand eines Ausführungsbeispiels einer Kupplungsausrückvorrichtung;
- Fig. 2: eine Prinzipskizze eines Geberzylinders im Teilschnitt;
- Fig. 3: ein Diagramm Betätigungskraft-Kupplungsweg am Ausrücklager für eine selbstnachstellende Kupplung;
- Fig. 4: ein Diagramm Betätigungskraft-Kupplungsweg am Ausrücklager für eine aktiv zugedrückte Kupplung.

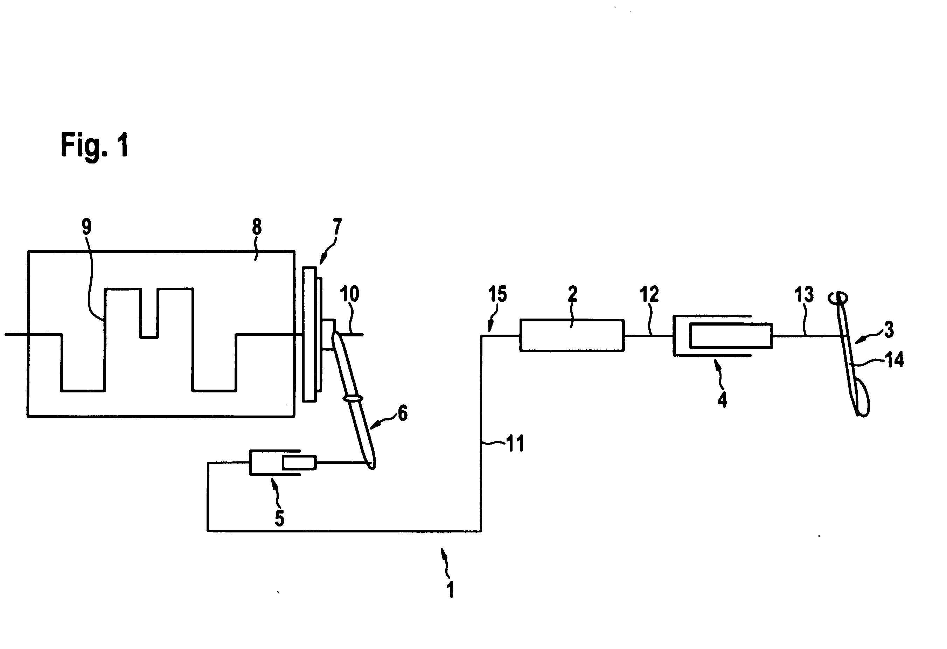

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Eine Steckverbindung 2 ist in dem gezeigten Ausführungsbeispiel in eine diese verbindende Druckmediumsleitung 15 eingebaut und trennt diese in einen ersten Leitungsstrang 11 und einen zweiten Leitungsstrang 12 voneinander. Es versteht sich, dass in anderen Ausführungsbeispielen die Steckverbindung 2 an dem Geberzylinder 4 oder dem Nehmerzylinder 5 angeordnet sein kann. Weiterhin kann in die Steckverbindung gleichzeitig die Funktion eines Schwingungsfilters, beispielsweise als so genanntes "Kribbelfilter", integriert sein.

Das Kupplungsausrücksystem 3 betätigt die Kupplung 7 hydraulisch durch Beaufschlagung des Geberzylinders 4 mittels eines Betätigungsgliedes 14, das vorzugsweise ein elektrischer Aktor ist. Hierdurch wird mittels einer mechanischen Übertragung 13 Druck im Geberzylinder 4 aufgebaut, der über die Druckmediumsleitung 15 bzw. den zweiten Leitungsstrang 12 die Steckverbindung 2 und den ersten Leitungsstrang 11 einen Druck im Nehmerzylinder 5 aufbaut. Der Nehmerzylinder 5 kann - wie in dem gezeigten Beispiel - konzentrisch um die Getriebeeingangswelle 10 angeordnet sein und sich axial an einem - nicht dargestellten Getriebegehäuse abstützen und die nötige Ausrückkraft über ein Ausrücklager an der Kupplung 7, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

Durch die Verbrennungsprozesse in der Brennkraftmaschine 8 erfährt die Kurbelwelle 9 in Abhängigkeit von der Ausgestaltung der Brennkraftmaschine 8, beispielsweise in Abhängigkeit von der Zylinderzahl, ungleichförmige Belastungen, die sich in Axial- und/oder Taumelschwingungen dieser äußern und die über die Ausrückmechanik 6 auf den Nehmerzylinder 5, die Druckmediumsleitung 15 auf den Geberzylinder 4 und von dort über die mechanische Übertragung 13 auf das Betätigungsglied 14 übertragen werden. Im Falle eines Aktors als Betätigungsglied 14 kann beispielsweise eine verminderte Regelgenauigkeit oder eine verkürzte Lebensdauer die Folge der Schwingungen sein. Ein beispielsweise in die Steckverbindung 2 integriertes Kribbelfilter ist daher zur Dämpfung in die Druckmediumsleitung 15 eingeschaltet und zur Dämpfung der von der Kurbelwelle 9 eingetragenen Vibrationen abgestimmt. Der Frequenzbereich derartiger Schwingungen liegt typischer Weise bei 50 bis 200 Hz.

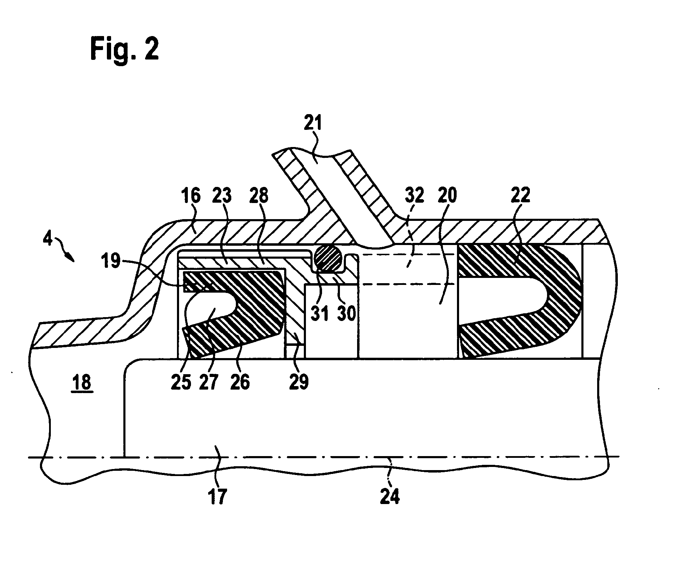

Fig. 2 zeigt einen Teilschnitt durch einen Geberzylinder 4 eines hydraulischen Systems 1. Der Geberzylinder umfasst im Wesentlichen ein Gehäuse 16, in dem ein Kolben 17 angeordnet ist. Das Gehäuse 16 und der Kolben 17 begrenzen einen in der Fig. 2 nur teilweise dargestellten Druckraum 18, in dem ein Fluid, vorzugsweise eine Hydraulikflüssigkeit, komprimiert und über die hier nicht dargestellte Druckmediumsleitung 15 weitergeleitet werden kann. Der Kolben 17 ist andererseits mit einer ebenfalls in der Fig. 2 nicht dargestellten Pleuelstange als mechanischer Übertragung 13 zur Betätigung beispielsweise mit einem elektromechanischen Aktor als Betätigungsglied 14 verbunden. Der Druckraum 18 ist mittels einer Primärdichtung 19 gegenüber einer Schnüffelbohrung 20 abgedichtet. Schnüffelnuten verbinden den Druckraum 18 in der Endstellung des Kolbens 17 mit der Schnüffelbohrung 20. Die Schnüffelbohrung 20 ist über eine Nachlaufleitung 21 mit einem nicht dargestellten Nachlaufbehälter verbunden. Der Nachlaufbehälter ist ein offener Behälter, der gegenüber der Umgebung also nicht druckdicht abgedichtet ist. Abgesehen von der gegenüber der Schnüffelbohrung 20 leicht erhöhten Einbaulage des Nachlaufbehälters, die ein sicheres Nachfließen der Hydraulikflüssigkeit gewährleisten soll, herrscht daher in der Schnüffelbohrung 20 in etwa der Umgebungsdruck. Die Schnüffelbohrung 20 wiederum ist mit einer Sekundärdichtung 22 gegenüber der Umgebung abgedichtet. Die Sekundärdichtung ist in Fig. 2 nur schematisch angedeutet. Die Primärdichtung 19 ist mittels eines Dichtungsträgers 23 in dem Gehäuse 16 angeordnet. Das Gehäuse 16, der Kolben 17 sowie die Primärdichtung 19 sind im Wesentlichen rotationssymmetrisch, entsprechend ist auch der Dichtungsträger 23 rotationssymmetrisch bezüglich einer Rotationsachse 24.

Die Ruhelage des Kolbens 17 ist in Fig. 2 die Position, bei der dieser die Schnüffelbohrung so weit wie möglich öffnet. Dies ist gleichzeitig die Lage, in der das hydraulische System druckentlastet und auf Umgebungsdruck ist. Der Kolben 17 ist dabei also so weit wie geometrisch möglich aus dem Druckraum 18 herausgezogen und liegt in der Regel an einem mechanischen Anschlag an.

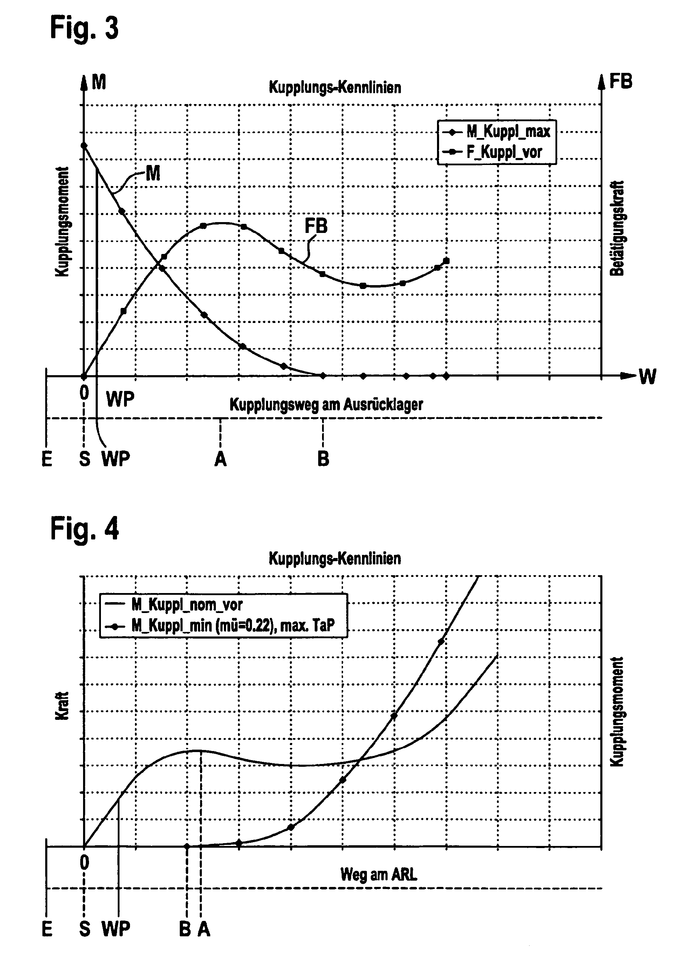

Figur 3 zeigt ein Diagramm der Betätigungskraft FB über den Kupplungsweg W am Ausrücklager. In dem gleichen Diagramm eingezeichnet ist das Kupplungsmoment M über den Kupplungsweg am Ausrücklager. Das Diagramm stellt eine schematische Darstellung der Kraft- und Wegverhältnisse dar, deswegen wurde auf eine Skalierung der Achsen verzichtet. Zunächst wird bei Betätigung des Kolbens 17 des Geberzylinders 4 von einem Endanschlag aus bis zu einem Weg S die Schnüffelbohrung 20 verschlossen, in diesem Wegbereich findet keine Übertragung einer Betätigungskraft auf die Kupplung 7 statt. Bei weiterer Betätigung des Kolbens 17 des Geberzylinders steigt die Betätigungskraft bis zu einem Weg am Ausrücklager A zunächst in etwa linear an um im Punkt A einen Maximalwert anzunehmen. Bei einem weiteren Weg der Kupplung am Ausrücklager sinkt die Betätigungskraft zunächst wieder ab um dann erneut anzusteigen. Der genaue Verlauf der Betätigungskraft über den Kupplungsweg am Ausrücklager hängt hauptsächlich von der Federkennlinie der Tellerfeder zur Betätigung der Kupplung ab. Das übertragene Moment ist im Bereich des Kupplungsweges E bis S maximal, da die Kupplung vollständig geschlossen ist. Erst bei einem weiteren Kupplungsweg am Ausrücklager wird die Kupplung 7 sukzessive geöffnet, so dass das übertragene Moment zunächst in etwa linear abfällt und bei vollständig geöffneter Kupplung, dies entspricht etwa dem Punkt FB in Figur 3, vollständig geöffnet ist und daher kein Moment mehr übertragen werden kann. Im normalen Fahrbetrieb bei geschlossener Kupplung 7 befindet sich der Kolben 17 des Geberzylinders 4 am Endanschlag E und gibt daher die Schnüffelbohrung 20 vollständig frei. Die Kupplung 7 ist also vollständig geschlossen und kann das maximale Kupplungsmoment übertragen. In diesem Fall ist aber das Ausrücklager vollständig entlastet, so dass der Kontakt zwischen Ausrücklager und Tellerfeder verloren gehen kann. Erfindungsgemäß ist nun vorgesehen, den Kolben des Geberzylinders bis zu einer Warteposition WP, die jenseits des Punktes liegt, bei dem die Schnüffelbohrung 20 verschlossen wird, zu betätigen. Die Kupplung wird also gerade soweit betätigt, dass das hydraulische System einen Druck, der größer als der Atmosphärendruck ist, aufbaut. Wie aus der Kupplungskennlinie in Figur 3 zu erkennen ist, ist dazu eine relativ geringe Betätigungskraft bei einem relativ geringen Kupplungsweg am Ausrücklager notwendig, das maximal übertragbare Moment der Kupplung wird aber verringert.

Figur 4 zeigt die Kupplungskennlinien entsprechend einer Darstellung der Figur 3 für eine aktiv zugedrückte Kupplung. Die Kupplung ist also im entlastenden Zustand des hydraulischen Systems vollständig geöffnet und wird durch Betätigung des Kolbens 17 des Geberzylinders 4 gegen die Kraft der Tellerfeder geschlossen. Derartige Kupplungen finden beispielsweise in Doppelkupplungsgetrieben Anwendung, da hier die "fail safe" Lage zum Beispiel bei einem Defekt in einem hydraulischen System die geöffnete Lage sein muss, da ansonsten das Getriebe bei zwei geschlossenen Kupplungen blockieren würde. Es findet also eine Umkehrung der Verhältnisse gegenüber der zuvor dargestellten selbst nachstellenden Kupplung statt. Die Kennlinie der Betätigungskraft über den Kupplungsweg am Ausrücklager ist vergleichbar der Darstellung der Figur 3. Zunächst erfolgt ein linearer Anstieg bis zu einem Maximalwert, danach in etwa eine konstante Betätigungskraft über den Weg am Ausrücklager, wobei zur geschlossenen Kupplung hin die Betätigungskraft wieder zunimmt. Bei einer Betätigung der Kupplung erfolgt zunächst wie zuvor dargestellt eine Bewegung des Kolbens des Geberzylinders von einem Endanschlag bis zu einem Punkt S, bei dem die Schnüffelbohrung vollständig verschlossen ist. Danach erfolgt erst der Druckaufbau und damit auch eine Kraft- und Wegübertragung in dem hydraulischen System. Die Kupplung überträgt dabei zunächst bis zu einem Weg am Ausrückzylinder B kein Moment, danach kann die Kupplung bei einem weiteren Weg am Ausrücklager ein Moment übertragen. In dem Bereich des Betätigungsweges zwischen den Punkten S und B in der Darstellung der Figur 4 ist also, obwohl ein Betätigungsweg am Ausrücklager zurückgelegt wird, die Kupplung weiterhin vollständig geöffnet und kann kein Moment übertragen. Auch hier wird nun wieder der Kolben des Geberzylinders soweit betätigt, dass die Schnüffelbohrung verschlossen ist und am Ausrücklager ein Weg WP zurückgelegt wurde. Das hydraulische System ist dabei unter einem Druck, der höher als der Atmosphärendruck ist und das Ausrücklager liegt an der Tellerfeder an.

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Ausrückmechanik
- 7: Kupplung
- 8: Brennkraftmaschine
- 9: Kurbelwelle
- 10: Getriebeeingangswelle
- 11: erster Leitungsstrang
- 12: zweiter Leitungsstrang
- 13: mechanische Übertragung
- 14: Betätigungsglied
- 15: Druckmediumsleitung
- 16: Gehäuse
- 17: Kolben
- 18: Druckraum
- 19: Primärdichtung
- 20: Schnüffelbohrung
- 21: Nachlaufleitung
- 22: Sekundärdichtung
- 23: Dichtungsträger
- 24: Rotationsachse
- 25: Grundkörper
- 26: Dichtlippe
- 27: Spalt
- 28: Axialring
- 29: Radialring
- 30: Dichtnase
- 31: Runddichtring
- 32: Abstandhalter

## Patentansprüche

1. Hydraulisches System (1) zur Betätigung einer Kupplung eines Kraftfahrzeuges, umfassend einen Geberzylinder (4) mit einem Gehäuse (16), einem in diesem axial verschiebbar angeordneten Kolben (17), der einen mit einer Hydraulikflüssigkeit gefüllten Druckraum (18) begrenzt und bei Betätigung des Geberzylinders (4) mittels einer auf den Kolben (17) wirkenden Kolbenstange (13) axial verschoben wird und **dadurch** die Hydraulikflüssigkeit mit Druck beaufschlagt, wobei der Kolben (17) in einer Schnüffelstellung (E) eine Verbindung zwischen einer Schnüffelbohrung (20) und dem Druckraum (18) freigibt, **dadurch gekennzeichnet, dass** der Kolben (17) in einer entlasteten Stellung der Kupplung soweit in eine Warteposition (WP) in den Druckraum (18) geschoben wird, dass die Schnüffelbohrung (20) verschlossen wird und ein Druck größer als der Atmosphärendruck in dem hydraulischen System aufgebaut wird.

2. System nach dem vorhergehenden Anspruch, **dadurch gekennzeichnet, dass** die Kupplung gegen den Druck in dem hydraulischen System geschlossen wird und dass der Kolben (17) in der entlasteten Stellung der Kupplung soweit in den Druckraum (18) geschoben wird, dass von der Kupplung kein Moment übertragen wird.

3. System nach Anspruch 1, **dadurch gekennzeichnet, dass** die Kupplung gegen den Druck in dem hydraulischen System geöffnet wird und dass der Kolben (17) in der entlasteten Stellung der Kupplung soweit in den Druckraum (18) geschoben wird, dass von der Kupplung in etwa das Maximalmoment übertragen werden kann.

4. System nach einem der vorhergehenden Ansprüche, **dadurch gekennzeichnet, dass** der Kolben (17) des Geberzylinders (4) durch einen elektromechanischen Aktor (14) betätigt wird.

## Claims

1. Hydraulic system (1) for actuating a clutch of a motor vehicle, comprising a master cylinder (4) having a housing (16) and having a piston (17) which is arranged in an axially movable manner in said housing (16) and which delimits a hydraulic-liquid-filled pressure space (18) and which, in the event of an actuation of the master cylinder (4), is moved axially, and thereby acts on the hydraulic liquid with pressure, by means of a piston rod (13) which acts on the piston (17), with the piston (17) opening a connection between a snifting bore (20) and the pressure space (18) in a snifting position (E), **characterized in that**, in an unloaded position of the clutch, the piston (17) is pushed into the pressure space (18) into a waiting position (WP) to such an extent that the snifting bore (20) is closed off and a pressure greater than the atmospheric pressure is built up in the hydraulic system.

2. System according to the preceding claim, **characterized in that** the clutch is closed counter to the pressure in the hydraulic system and **in that**, in the unloaded position of the clutch, the piston (17) is pushed into the pressure space (18) to such an extent that no torque is transmitted by the clutch.

3. System according to Claim 1, **characterized in that** the clutch is opened counter to the pressure in the hydraulic system and **in that**, in the unloaded position of the clutch, the piston (17) is pushed into the pressure space (18) to such an extent that approximately the maximum torque can be transmitted by the clutch.

4. System according to one of the preceding claims, **characterized in that** the piston (17) of the master cylinder (4) is actuated by an electromechanical actuator (14).

## Revendications

1. Système hydraulique (1) pour l'actionnement d'un embrayage d'un véhicule automobile, comprenant un maître-cylindre (4) avec un boîtier (16), un piston (17) disposé de manière déplaçable axialement en translation dans celui-ci, qui limite une chambre de pression (18) remplie de liquide hydraulique et qui est déplacé axialement dans le cas de l'actionnement du maître-cylindre (4) au moyen d'une tige de piston (13) agissant sur le piston (17), et qui sollicite ainsi le liquide hydraulique en pression, le piston (17) libérant, dans une position d'aspiration (E), une connexion entre un alésage d'aspiration (20) et la chambre de pression (18), **caractérisé en ce que** le piston (17), dans une position déchargée de l'embrayage, est poussé dans une position d'attente (WP) dans la chambre de pression (18) jusqu'à ce que l'alésage d'aspiration (20) soit fermé, et qu'une pression supérieure à la pression atmosphérique s'établisse dans le système hydraulique.

2. Système selon la revendication précédente, **caractérisé en ce que** l'embrayage est fermé à la pression dans le système hydraulique, et **en ce que** le piston (17), dans la position déchargée de l'embrayage, est poussé dans la chambre de pression (18) dans une mesure telle qu'aucun couple ne soit transmis par l'embrayage.

3. Système selon la revendication 1, **caractérisé en ce que** l'embrayage est ouvert à la pression dans le système hydraulique et **en ce que** le piston (17) est poussé dans la position déchargée de l'embrayage dans la chambre de pression (18) dans une mesure telle que le couple maximal éventuel puisse être transmis par l'embrayage.

4. Système selon l'une quelconque des revendications précédentes, **caractérisé en ce que** le piston (17) du maître-cylindre (4) est actionné par un actionneur électromécanique (14).
